# EUROPEAN PATENT APPLICATION

(11) **EP 2 518 088 A1**
(43) Date of publication of application: **31.10.2012**
(21) Application number: 10838762.2
(22) Date of filing: 20.12.2010
(51) Int. Cl.: C08B 37/06, A23L 1/0524

(54) **METHOD FOR PRODUCING LIQUID PECTIN FROM APPLE POMACE**

(30) Priority: 23.12.2009 HU 0900805
(71) Applicant: Donchenko, Ljudmila, 1056 Budapest (HU); Vasiliev, Andrey, 4551 Nyíregyháza Oros (HU); Vasiliev, Pavel, 1154 Budapest (HU)
(72) Inventor: Donchenko, Ljudmila, 1056 Budapest (HU); Vasiliev, Andrey, 4551 Nyíregyháza Oros (HU); Vasiliev, Pavel, 1154 Budapest (HU)
(74) Representative: Varga, Tamas Péter
(86) International application number: PCT/HU2010/000146
(87) International publication number: WO 2011/077172

(57) **Abstract**

The invention relates to pectin production and, more specifically, to methods for producing pectins with a high galacturonic acid content for the production of functional food products.

The essence of the invention is that fresh, freshly pressed or dry raw plant material is used, and the hydrolysis and extraction of the pectic substances is carried out using water in the presence of 0.05-0.15% organic food acids at a temperature of 85-90 °C and with a solid to liquid phase ratio of 1:5-12. The hydrolysed mixture is separated in order to isolate pectin extract. The pectin extract is filtered and sent for vacuum concentration.

## Description

The invention relates to pectin production and, more specifically, to methods for producing pectins with a high galacturonic acid content for the production of functional food products.

The essence of the invention: use of plant material in a fresh, freshly, or in dry form, the hydrolysis of pectin extraction is carried out with water, in the presence of 0.05-0.15% of organic food acid at a temperature of 85-90 ° C and the ratio of solid and liquid phases of 1:5 -12. Devide the hydrolysis mixture with the release of pectin extract. Pectin extract in filtered and sent to a vacuum concentration.

It is known that in addition to gelling properties used in the food industry, pectin has valuable biological effects, the most famous of which is a neutralizing effect when a human body is injected by heavy metals, radionuclides, and other toxins.

Detoxifying ability of pectin molecules based on the interaction of pectin with the cations of heavy and radioactive metals to form insoluble complexes that are not absorbed and excreted. This property gives a base for pectins to recommend them as a therapeutic and prophylactic agent for people who are in an environment contaminated with radionuclides and heavy metals associated with the production and use of pesticides, as well as for a healthy diet.

It is also known that pectins have a therapeutic effect in peptic ulcer disease, regulate cholesterol, increase resistance to allergic factors, exhibit bactericidal activity and other therapeutic properties

Thus, thanks to valuable biological qualities pectin is a very important component of products preventing and functional foods

Research has shown that the use of dry pectin in profilactic nutrition, due to its poor solubility in water, there is underutilization of complexing properties of pectin due to lack of hydration, and its limited surface contact with the environment of the gastrointestinal tract. To make effective use of complexing and detoxifying properties of pectin it is necessary to introduce into the human body in the hydrated, ie, liquid form.

It is known the method of producing liquid pectin, developed by the Austrian company "Grill und Grossmann" for different types of pectin out of apple pomace. The method involves hydrolysis of dried apple pomace with an aqueous solution of sulfur dioxide at 80-85 ° C and periodic stirring. At the end of the hydrolysis mixture is pumped into an automatic filter press, where pressing and filtering is one operation. Depressed husks are used for animal feed, and the solution containing pectin and other soluble substances (sugars, acids) are subject to further purification in the separator and filter. Filtered pectin solution concentration supplied to a multi-stage vacuum evaporation apparatus. The resulting concentrate is a liquid pectin, which can be used directly as a finished product.

The disadvantage of this method is the use of a solution of sulfur dioxide by hydrolysis, which leads to the destruction of pectins, and the presence of residual anhydride does not allow to use it as a functional product.

In addition, the use as an agent of the hydrolysis of an aqueous solution of sulfur dioxide complicates the process of gaining liquid pectin, because it requires mandatory concentration to remove the residual concentration of sulfuric acid and results in increased demands on the corrosion resistance of the equipment.

The closest is a method of obtaining pectin concentrate out of plant material, particularly of apple pomace, in which the dried pomace extraction before hydrolysis-washed 2-3 times with water. The hydrolysis is carried out by treatment with dilute solutions of mineral acids and organic acids. From the swollen material in the solution goes only a part of pectin. Therefore, after the separation of the hydrolyzate, pomace further extracted with water and the desired product is prepared from a mixture of extracts. In this case the average content of pectin in the resulting extract is only 0.3-0.4%.

The disadvantages of this method is the difficulty of obtaining pectin concentrate, the method also requires expensive and not having industrial uses of lactic acid or environmentally unsafe sulfur dioxide, which requires mandatory and careful desulfitatsii of pectin extract for direct use as a finished product. In addition, these pectin extracts have low organoleptic and biological characteristics high enough, as poor in sugars, vitamins, organic acids, which are removed along with the flushing water. Mandatory operation desulfitaturization of pectin product leads to additional hydrolysis of pectin, a breakdown of the polymer chain, ie degradation of the polysaccharide, which reduces maintenance and deterioration of the quality indicators of pectin, reduces, thus, its biological value, including the complexing ability.

The use of the such mineral acids (hydrochloric, nitric, etc.) as a hydrolyzing agent leading to the unsuitability of pectin extract for immediate use and food production.

The aim of the present invention is to simplify method, improving nutritional and biological value of the product.

The goal is achieved by a method of producing a liquid food product, the hydrolysis of pectin extraction is carried out with water in the presence of 0.05-0.15% of organic food acid at a temperature of 85-90 ° C and the ratio of solid and liquid phases 1:5-12. Presiditation the hydrolysis mixture with the release of of pectin extract. Pectin extract is filtered and sent to a vacuum concentration. Dedicated concentrate is used as the liquid pectin food product containing at least 2.5% hydrotopektin.

Due to the optimal combination of the ingredients included in the final product, containing pectin, vitamins, organic acids, minerals, as well as coloring and flavoring quality, it has not only a high biological value, but also a pleasant taste and flavor, which improves organoleptic qualities of the final product and, consequently, its nutritional value. The authors found that the content of pectic substances in the finished liquid pectin food product must be not less than 2.5%. This pectin content of the final product provides a daily prophylactic dose of pectin, when used in an amount of 70 ml. A lower content of pectin reduces the amount of active ingredients in one product.

Using dedicated enriched extract as liquid pectin containing food, makes maximum use of detoxifying and complexing qualities of pectin, as it is in the hydrated form in which it takes them to the greatest extent, as well as to enrich the final product of biologically active substances (vitamins, micro and trace elements, etc. ), improving metabolism and resistance to unfavorable factors.

*Example **1.*** Apple pomace, fresh or freshly pressed poured into a container of hydrolyzing agent. The process of hydrolysis, extraction is carried out with water containing 0.05% citric acid. Process parameters: temperature 80 ° C, the ratio of solid and liquid phases of 1:5, the duration of 3 hours The liquid phase is separated by pressure, filtered and sent to concentration, followed by bottling. The obtained ready-to-eat liquid food product contains 2.56% of pectin with a degree of eterification of 71.2% with complexing ability of PB2 + / g pectin. He has good organoleptic characteristics typical of raw apple.

***Example 2***. Apple pomace, fresh or freshly pressed poured into a container of hydrolyzing agent. The process of hydrolysis, extraction is carried out with water containing 0.15% citric acid. Process parameters: temperature 90 ° C, the ratio of the solid and liquid phases of 1:7, the duration of 2 hours The liquid phase is separated by pressure, filtered and sent to concentration, followed by bottling. The obtained final product is different in harmony and coherence of taste, contains 2.73% pectin, pectin degree of esterification of 71.5% of the complexing ability of PB2 + 124 mg / g pectin.

*Example 3.* Apple pomace, fresh or freshly pressed poured into a container of hydrolyzing agent. The process of hydrolysis, extraction is carried out with water containing 0.1% citric acid. Process parameters: temperature 85°C, the ratio of the solid and liquid phases of 1:6, the duration of 2 hours. Remaining operations according Example 1. The finished product has good organoleptic qualities and contains 2.7% pectin, pectin degree of esterification 70% of the complexing ability of PB2 + 137 mg / g pectin.

*Example 4.* Apple pomace in the dried form in a bowl of hydrolyzing agent. The process of hydrolysis, extraction is carried out with water containing 0.07% citric acid. Process parameters: temperature 87°C, the ratio of solid and liquid phases 1:10, duration 2.5 hours. Remaining operations according Example 1. The finished product has good organoleptic qualities and contains 2.82% pectin, pectin degree of esterification of 65.9% with complexing ability of PB2 + 127 mg / g pectin.

*Example 5.* Apple pomace in the dried form in a bowl of hydrolyzing agent. The process of hydrolysis, extraction is carried out with water containing 0.15% citric acid. Process parameters: temperature 90 ° C, the ratio of solid and liquid phases 1:11, the duration of 2 hours. Remaining operations as of Example 1. The finished product has good organoleptic qualities and contains 2.9% pectin, pectin degree of esterification of 65.7% with complexing ability of PB2 + 140 mg / g pectin.

*Example 6.* For carrying out the method in the pomace dried poured into a container with a hydrolyzing agent. The process of hydrolysis, extraction is carried out with water containing 0.15% citric acid. Process parameters: temperature 90 ° C, the ratio of solid and liquid phases 1:12, the duration of 2 hours. Remaining operations of as Example 1. The product contains 3.24% of pectin degree of esterification 60% with the complexing ability of PB2 + 147 mg / g of pectin, pleasant taste.

The proposed method has the following advantages: increased production of pectin-containing food products, in connection with the use of as pectin containing raw material apple pomace" expanding the range and increases the biological value of profilactic food products, designed to detoxify people that come into contact with the cations of heavy metals and radionuclides, allows short period of time to organize the production of profilactic and functional aims pectin products with high detoxifying properties.

## Claims

1. METHOD FOR PRODUCING LIQUID PECTIN FROM APPLE POMACE, providing for the hydrolysis-extraction of plant material in an acidic environment, the selection of the extract of the hydrolysis mixture, **characterized in that** the raw materials used in fresh or freshly dried, hydrolysis-extraction of pectin substances carried by water in the presence of 0.05 -0.15% of organic food acid at a temperature of 85-90 ° C and the ratio of solid and liquid phases 1:5-12, followed by concentration of the selected gidrotopektina to provide its content in the final product is not less than 2.5%.
